(19) Europäisches Patentamt
European Patent Office
Office européen des brevets

(11) Publication number: **0 506 386 A2**

# (12) EUROPEAN PATENT APPLICATION

(21) Application number: **92302603.3**

(51) Int. Cl.[5]: **C09K 3/16**

(22) Date of filing: **26.03.92**

(30) Priority: **29.03.91 JP 66206/91**

(43) Date of publication of application:
**30.09.92 Bulletin 92/40**

(84) Designated Contracting States:
**BE DE FR GB IT NL**

(71) Applicant: **SUMITOMO CHEMICAL COMPANY LIMITED**
**5-33, Kitahama 4-chome, Chuo-ku**
**Osaka-shi, Osaka 541(JP)**

(72) Inventor: **Abe, Hiroomi**
**251-75, Naganumacho**
**Chiba-shi, Chiba 281(JP)**
Inventor: **Hagimori, Hiroshi**
**1353-4, Shiizu**
**Ichihara-shi, Chiba 299-01(JP)**
Inventor: **Okumura, Etsuji**
**7-3, Satsukigaoka**
**Yotsukaido-shi, Chiba 284(JP)**
Inventor: **Suzuki, Yasurou**
**5-9-14, Hatazawaminami**
**Kisarazu-shi, Chiba 292(JP)**

(74) Representative: **Cresswell, Thomas Anthony et al**
**J.A. Kemp & Co. 14 South Square Gray's Inn**
**London WC1R 5LX(GB)**

## (54) Antistatic resin compositions.

(57) A resin composition having superior antistatic and electroconductive properties, particularly useful in the electro-electronic and automobile fields, are provided. The resin composition essentially comprises a polyphenylene ether resin, a polyamide resin, and carbon black, with other components and additives. Viscosities of the polyphenylene ether resin and the polyamide resin extracted from the composition have specific values, respectively.

EP 0 506 386 A2

This invention relates to a thermoplastic resin composition containing a polyphenylene ether resin and a polyamide resin, having antistatic and electroconductive properties.

Polyphenylene ether resins are a thermoplastic resin having excellent properties, such as mechanical properties, heat-resistance and dimentional stability. When this resin alone is used, however, it exhibits much inferior impact strength and solvent resistivity, and shows inferior processability due to its high melt viscosity. On the other hand, polyamide resins are a thermoplastic resin having excellent characteristics, such as mechanical properties, solvent resistivity and processability, but they exhibit inferior impact strength and heat resistivity, and show much inferior dimentional stability due to their high hygroscopicity, with significant decrease in the mechanical properties due to the hygroscopicity. To offset each disadvantage of these resins, there have been proposals wherein both resins are blended each other.

However, with simple blendings, the excellent properties provided by both of these resins tend to be deprived. Thus, some measures have been tried to attain an improvement in the mechanical properties by using a kind of various compatibilizing agents when a polyphenylene ether resin and a polyamide resin are blended, thereby to improve the mutual dispersibility. Such measures have been disclosed in the Japanese Examined Patent Publications Nos. 11966/1985 and 10494/1986, and the Japanese Unexamined Patent Publications Nos. 66452/1984 and 49753/1981. Polyphenylene ether resin/nylon resin compositions thus-obtained are being employed in the electro-electronic and automobile fields as materials having advantageous mechanical properties, heat-resistivity, solvent resistivity, processability, dimentional stability, and hygroscopicity. While, particularly in the electro-electronic fields, demand for the development of materials providing antistatic and electroconductive properties along with high heat resistivity is increasing recently.

The present invention relates to a composition containing a polyphenylene ether resin and a polyamide resin, having excellent antistatic and electroconductive properties along with excellent processability.

As the results of extensive studies, the present inventors have accomplished the present invention in accordance with the findings that polyphenylene ether resin/polyamide resin compositions exhibit electroconductivity when added with a specific amount of carbon black, and with the discoveries that, surprisingly, the electroconductivity is significantly increased, when a given amount of carbon black is blended and the blending ratio and relative viscosities of the both resins are specifically defined. (Hereinafter, the polyphenylene ether resin and the polyamide resin may be referred to as PPE and PA, respectively.)

Thus, The present invention relates to a thermoplastic resin composition having excellent antistatic or electroconductive properties and processability, which compositon comprises

(a) 2~95 % by weight of a polyphenylene ether resin and/or a modified polyphenylene ether resin;
(b) 98~5 % by weight of a polyamide resin;
(c) 2 - 200 parts by weight of carbon black based on 100 parts by weight of the said (a) + (b);
(d) 0-50 parts by weight of a compatibilizing agent based on 100 parts by weight of the said (a) + (b);
(e) 0 - 100 parts by weight of a rubber-like material based on 100 parts by weight of the said (a) + (b);
(f) 0 - 150 parts by weight of an inorganic filler based on 100 parts by weight of the said (a) + (b);

wherein the logarithmic viscosity of the polyphenylene ether resin extracted from the resin composition is 0.1~0.6 dl/g, and the relative viscosity of the polyamide extracted from the resin composition is 0.8~4.0.

Polyphenylene ether resins (PPE) employed in the present invention as the component (a) include polymers obtained by oxidatively polymerizing one or more of phenol compounds which are represented by the following formula;

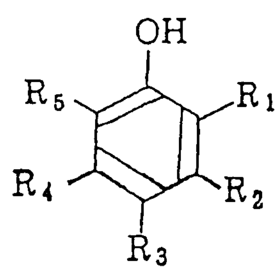

(in the formula, $R_1$ , $R_2$ , $R_3$ , $R_4$ and $R_5$ ,respectively, being selected from the group of hydrogen, halogen atoms, hydrocarbon residues and substituted hyrocarbon residues, at least one of them being a hydrogen atom,) using an oxidative coupling catalyst in the presence of oxygen or a molecular oxygen-containing gas.

Embodiments of $R_1$ , $R_2$ , $R_3$ , $R_4$ and $R_5$ in the above formula include hydrogen, chlorine, bromine,

fluorine, iodine, methyl, ethyle, n- or isopropyl, prim-, sec- or tert-butyl, chloroethyl, hydroxyethyl, phenylethyl, benzyl, hydroxymethyl, carboxyethyl, methoxycarbonylethyl, cyanoethyl, phenyl, chlorophenyl, methylphenyl, dimethylphenyl, ethylphenyl, allyl, and the like.

As the embodiments of the above formula, phenol, o-, m- or p-cresol, 2,6-, 2,5-, 2,4- or 3,5-dimethylphenol, 2-methyl-6-phenylphenol, 2,6-diphenylphenol, 2,6-diethylphenol, 2-methyl-6-ethylphenol, 2,3,5-, 2,3,6- or 2,4,6-trimethylphenol, 3-methyl-6-tert-butylphenol, thymol, 2-methyl-6-allylphenol, and the like, may be illustrated. Further, copolymers of a compound of the above general formula with a phenol compound outside the scope of the above general formula, for example, a multivalent hydroxy aromatic compounds such as bisphenol A, tetrabromobisphenol A, resorcin, hydroquinone, novolac resin, and the like, may be employed.

As preferable compounds among those, there may be mentioned homopolymers from 2,6-dimethylphenol or 2,6-diphenylphenol, and copolymers containing a major portion of 2,6-xylenol and a minor portion of 3-methyl-6-tert-butylphenol or 2,3,6-trimethylphenol.

The oxidative coupling catalysts employed for the oxidative polymerization of the present compounds are not limitative, and any catalyst may be used as far as it has the capability of catalysing polymerization.

Modified polyphenylene ether resins which may be employed in the present invention as the component (a) mean those obtained by preliminarily modifying a polyphenylene ether resin with the later-mentioned compatibilizing agent (d), in order to improve the mutual dispersibility of the Polyphenylene ether and polyamide. For the modification, a method in which the compatibilizing agent (d) is allowed to add to the polyphenylene ether resin by kneading them at a temperature above the melting point of the polyphenylene ether resin, a method in which both are allowed to react using a suitable solvent in the presence or absence of a radical initiator, and a method in which the agent (d) is allowed to add at the time of polymerization of the polyphenylene ether resin, may be used.

Further, the component (a) may be a mixture of the modified polyphenylene ether resin as mentioned above and an unmodified polyphenylene ether resin.

Furthermore, the component (a) in the present invention may be a polyphenylene ether resin and/or modified polyphenylene ether resin which involves a styrene resin. Such involvement of the styrene resin may be through admixing or grafting.

Such styrene resins include, in concrete terms, polymers of one or more polymer units selected from styrene, $\alpha$-methylstyrene, p-methylstyrene, etc. There may be exemplified polystyrene, rubber-reinforced polystyrene, poly-$\alpha$-methylstyrene, poly-p-methylstyrene, styrene-acryronitrile copolymers, styrene-maleate copolymers, and the like.

The admixing or grafting amount of the styrene resin is preferably 500 parts by weight or less against 100 parts by weight of the polyphenylene ether. With more than 500 parts by weight of the admixing or grafting amount of the styrene resin, the heat resistance of the present thermoplastic resin composition is disadvantageously decreased.

The polyamide resins employed in the present invention as the component (b) include one or more of those selected from aliphatic polyamides, thermoplastic aromatic copolyamides, aromatic nuclear-hydrogenated copolyamides, and the like.

Aliphatic polyamide may be prepared by binding of one or more of saturated aliphatic dicarboxylic acids and one or more of aliphatic diamines, or by ring-cleavage polymerization of a lactam. For example, nylon 6, nylon 66, nylon 64, nylon 10, nylon 11, nylon 12, nylon 66/6 copolymer, etc. may be illustrated.

Thermoplastic aromatic copolyamide may be any copolyamide containing aromatic constituent. Such thermoplastic copolyamide containing aromatic constituent means those having one or more of aromatic amino acids or aromatic diamines and/or one or more of aromatic dicarboxylic acids as the main constituent. Isocyanates may be used in place of the diamines. The copolymer constituent used if necessary is not limitative. As the examples of the thermoplastic aromatic copolyamide, copolymerized polyamides from p-aminomethylbenzoic acid and $\epsilon$ -caprolactam (nylon AHBA/6), polyamides having 2,2,4-/2,4,4-trimethylhexamethylenediamineterephthalate as the main component, such as nylon THDT, THDT/6I, etc. may be illustrated.

Aromatic nuclear-hydrogenated copolyamide may be those prepared by partial or exhaustive nuclear-hydrogenation of the aromatic ring of the aromatic monomer used for the preparation of the above-mentioned aromatic copolyamide.

As for the terminal residues of the polyamide, the mole ratio of the terminal amino group to the terminal carboxyl group is preferably not more than 1.

The carbon black employed in the present invention as the component (c) may be that used for coloration, rubber-reinforcement, and giving electroconductivity. To yield electroconductivity with high efficiency against the adding amount of carbon black, such carbon black as having 70 ml/100 mg or more

of dibutylphthalate (DBP) absorption amount is preferred. The term, "dibutylphthalate absorption amount", used herein means a value measured by the method defined in ASTM D2414. More preferable dibutylphthalate absorption amount is 100 ml/100 mg or more, furthermore preferably 150 ml/100 mg or more.

Particularly preferred carbon black includes acetylene black obtained by thermal cracking of acetylene gas, Ketjenblack produced by furnace imperfect combustion using material crude oil, and the like. Such carbon black efficiently increases electroconductivity even in a small amount.

The compatibilizing agent employed in the present invention as the component (d) is used to improve the mutual dispersibility of PPE and PA. Embodiments are shown in the following (A) through (F).

(A) Compounds having (i) C-C double bonds or C-C triple bonds, and (ii) carboxyl, acid anhydride, amino, acid amide, imide, epoxy, carboxylic acid ester, isocyanate or methylol groups, or oxazoline ring, or those simaltaneously having hydroxyl group. Specifically, maleic acid, maleic anhydride, fumalic acid, unsaturated amines, glycidyl methacrylate, and the like, may be illustrated. These compounds have been disclosed in detail in the Japanese Unexamined Patent Publications 26913/1981 and 49753/1981.

(B) Saturated aliphatic polycarboxylic acids and their derivatives, represented by the formula:

$$(R_6\ O)m\ R(COOR_7\ )n\ (CONR_8\ R_9\ )_s$$

wherein R: a straight chain or branched aliphatic hydrocarbon with 2~20, preferably 2~10, carbon atoms; $R_6$ : hydrogen, an alkyl, aryl, acyl, or carbonyldioxy group, preferably hydrogen; $R_7$ : hydrogen, an alkyl, or aryl group, with 1~20, preferably 1~10, carbon atoms; $R_8$ and $R_9$ : hydrogen, an alkyl or aryl group with 1~10, preferably 1~6, more preferably 1~4, carbon atoms, respectively; m = 1 or 2; n + s being an integer of not less than 2, preferably 2 or 3; n and s being respectively an integer not less than 0; and ($R_6$ O) being located at the $\alpha$- or $\beta$-position of the carbonyl group and having 2 - 6 carbon atoms between the at least two carbonyl groups.

Specifically, esters, amides, anhydrides, hydrates, and salts of saturated aliphatic polycarboxylic acids may be illustrated. The saturated aliphatic polycarboxylic acids include citric, malic, agaricic and other acids. These compounds have been minutely disclosed in the Japanese Patent Publication (KOHYO) No. 502195/1986.

(C) Compounds represented by the formula:

(I) - Z - (II)

wherein (I) being at least a group of the formula: (X-CO)- (wherein X is F, Cl, Br, I, OH, $OR_{10}$, or -O-CO-$R_{10}$, $R_{10}$ being H, or an alkyl or aryl group); (II) being at least a carboxylic acid, acid anhydride, acid amide, imide, carboxylate ester, amino, or hydroxy group; and the groups of (I) and (II) being covalently bound through the linkage Z which is a bivalent hydrocarbon.

Specifically, chloroformylsuccinic anhydride, chloroethanoylsuccinic anhydride, trimellitic anhydride acid chloride, trimellitic anhydride•acetic anhydride, terephthalic acid chloride, etc. may be illustrated.

(D) Silane compounds having (i) at least one silicon atom bound to a carbon atom via oxygen linkage, and (ii) at least an ethylenic C-C double bond or C-C triple bond and/or a functional group selected from amino and mercapto groups, said functional group being not bound to the silicon atom.

(E) Oxidized polyolefin wax.

(F) One or more of compounds, selected from a copolymer having a unit of vinyl aromatic compound and a unit of $\alpha$ , $\beta$ -unsaturated dicarboxylic acid or its acid anhydride, and a copolymer having a unit of vinyl aromatic compound and a unit of $\alpha$ , $\beta$ -unsaturated dicarboxylic acid imide compound.

The compounds exemplified herein should never be construed to limit the compatibilizing agent (d) employed in the present invention, and any such compounds which are employable for the purpose of improving the mutual solubility of PPE and PA may be used, singly or in combination of the two or more of them.

Alternatively, the compatibilizing agent (d) may be combinedly used with the modified polyphenylene ether resin mentioned above.

Thus the method of using the compatibilizing agent (d) and/or the modified polyphenylene ether resin secures an increase in the mutual dispersibility of the polyphenylene ether resin and polyamide resin when blended, and an improvement in the mechanical properties of the final composition.

The rubber-like materials used in the present invention as the component (e) may be any of natural and synthetic polymer materials which are elastic at room temperatures. Specifically, ethylene-propylene rubber, ethylene-propylene-nonconjugated diene rubber, ethylene-butene rubber, polybutadiene, styrene-butadiene block copolymer rubber, styrene-butadiene copolymer rubber, partially hydrogenated styrene-butadiene-styrene block copolymer rubber, styrene-isoprene block copolymer rubber, partially hydrogenated styrene-isoprene block copolymer rubber, polyurethane rubber, styrene-grafted ethylene-propylene-nonconjugated diene rubber, styrene-grafted ethylene-propylene rubber, styrene/acrylonitrile-grafted ethylene-propylene-nonconjugated diene rubber, styrene/acrylonitrile-grafted ethylene-propylene rubber, and the like, may be illustrated. Mixtures of these compounds are also usable. Further, modified rubbers modified with a functional monomer containing other acids or epoxy group may be employed.

Inorganic fillers as the component (f) may be added to the resin composition of the present invention. In general, inorganic fillers are blended for the purpose of improving the rigidity and hardness. Suitable inorganic fillers include calcium carbonate, magnesium carbonate, aluminum hydroxide, magnesium hydroxide, zinc oxide, titanium oxide, magnesium oxide, aluminum silicate, magnesium silicate, calcium silicate, silica, hydrated calcium silicate, hydrated aluminum silicate, talc, mica, mineral fiber, Zonolite, potassium titanate whisker, magnesium oxysulfate, glass balloon, glass fiber, glass beads, carbon fiber, stainless fiber, etc. These fillers may be blended singly or as mixtures. Inorganic fillers employable in the present invention is not restricted by these illustrations. Particularly among those, talc, carbon fiber, stainless fiber, and potassium titanate whisker, are preferably blended to the compositon, since they are effective in much increasing the statistic and conductive properties.

In the present invention, a polyphenylene ether resin and/or modified polyphenylene ether resin (a) and a polyamide resin (b) are blended in a mixing ratio of 2~95 % by weight of (a) and 98~5 % by weight of (b). With high than 95 % by weight of (a), the chemical resistance and moldability of the resin composition significantly decrease.

While, the electroconductivity which is a characteristic of the present invention, tends to decrease with the increase of the blending amount of the polyphenylene ether resin and/or modified polyphenylene ether resin (a), within a series of the blends having the same amount of carbon black. With more than 95 % by weight, the electroconductivity decrease disadvantageously. With less than 2 % by weight, the heat resistance and dimensional stability of the resin composition is not satisfactory. Preferable mixing ratio is 2~75 % by weight of the component (a) and 98~25% by weight of the component (b), more preferably, 2~60 % by weight of (a) and 98~40 % by weight of (b), most preferably, 5~50 % by weight of (a) and 95~50 % by weight of (b).

The amount of carbon black (c) blended in the present invention is 2~200 parts by weight based on 100 parts by weight of (a) + (b). With less than 2 parts by weight, no improvement in the antistatic and conductive properties is obtained. With more than 200 parts by weight, the processability decreases disadvantageously, though the antistatic and conductive properties are satisfactory. Preferable blending amount of carbon black (c) is 4~100 parts by weight, more preferably, 4~60 parts by weight.

An amount of the compatibilizing agent (d) blended in the present invention is 0~50 parts by weight based on 100 parts by weight of (a) + (b). With more than 50 parts by weight, the processability or moldability significantly lowers disadvantageously. Preferable blending amount of the compatibilizing agent is 0 - 30, more preferably 0 - 10 parts by weight.

The blending amount of the rubber-like material (e) is 0-100 parts by weight based on 100 parts by weight of (a) + (b) . With more than 100 parts by weight, the heat resistance much lowers disadvantageously.

The amount of the inorganic filler (f) blended in the present invention is 0~150 parts by weight based on 100 parts by weight of (a) + (b). With more than 150 parts by weight, the moldability of the present resin composition significantly lowers disadvantageously.

The thermoplastic resin composition of the present invention is obtained by blending the said components (a)~(f) according to the conventional method, followed by melting and kneading. But, such blending and kneading may be conducted in an arbitrary sequence. Thus, any combination of some of the components may be separately kneaded, and then blended and kneaded with the remaining components. Into an extruder provided with a number of feeding openings, one or more of any components may be sequentially fed along the cylinder.

Further, the composition of the present invention may be added with conventional additives such as flame retardants, plastisizers, antioxidants, wheathering agents, and the like. Particularly, satisfactory results will be obtained when using those known as the additives for polyphenylene ether or nylon.

The values of logarithmic and relative viscosities of the resins as defined in the compositon of the present invention are those of the polyphenylene ether and nylon which are extracted from the resin composition, rather than those of the material polyphenylene ether and nylon. The viscosities of each material resin and of the resins extracted from the resin composition are considerably different, depending upon the component ratio of the resin composition, the amount of the compatibilizing agent, and conditions and method of granulation.

After extensive studies on the relationship between the viscosities of the resin components and the electroconductivity of the resin composition, it has been found that there is a close correlation between the viscosities of each resin component extracted from the resin compositon, not of the material resins themselves, and the electroconductivity of the resin composition.

In the composition of the present invention, the logarithmic viscosity of the polyphenylene ether resin extracted from the resin composition is 0.1~0.6 dl/g. With a logarithmic viscosity of higher than 0.6 dl/g, the antistatic or electroconductive property significantly decreases. With less than 0.1 dl/g, the physical properties deteriorates significantly. Preferable logarithmic viscosity of the extracted PPE is 0.2 ~0.50 dl/g, more preferably, 0.2 ~0.45 dl/g.

Also, the relative viscosity of the polyamide resin extracted from the resin composition is within the range of 0.8~4.0. Preferable value of the extracted PA is 1.0~3.0, more preferably, 1.0~2.5. With a PA relative viscosity of higher than 4.0, the antistatic or electroconductive property significantly lowers. With lower than 0.8, the physical properties significantly deteriorate.

The polyphenylene ether resin extracted from the resin compositon of the present invention is a chloroform-soluble constituent obtained by milling pellets for melt-extrusion or a shaped article of the composition to about 0.5 mm size, and extracting with chloroform using a Soxhlet extractor for 24 hours.

The polyamide resin extracted from the resin composition is a 2,2,2-trifluoroethanol-soluble constituent obtained by extracting the chloroform-insoluble portion as above with 2,2,2-trifluoroethanol.

In the present invention, the logarithmic viscosity of the polyphenylene ether resin is determined by dissolving 0.5 g of a polyphenylene ether resin extracted according to the above method into 100 cc of chloroform, and measuring by Ubbelohde viscometer at 30° C, and shown by $\eta_{Inh}$ as in the following formula, with t1 of the flowing-down period of time for the solution and t0 of flowing-down period of time for chloroform.

$$\eta_{Inh} = 1n\ (t1/t0)/0.5\ (dl/g)$$

In the present invention, the relative viscosity of the polyamide resin is determined in accordance with JIS K-6810 by dissolving 1 g of a polyamide resin extracted according to the above method into 100 cc of 98 % concentrated sulfuric acid, and measuring by Ostwald viscometer at 25° C, and shown by $\eta_{rel}$ as in the following formula, with T1 of the flowing-down period of time for the solution and T0 of flowing-down period of time for 98 % concentrated sulfuric acid.

$$\eta_{rel} = T1/T0$$

These logarithmic and relative viscosities are generally used as the scales for molecular weight of high polymers.

Shaped articles prepared from the resin composition of the present invention can be applied to various usages centering around the fields of electro-electronic parts and accessories, such as conductive trays for IC chip engineering, IC chip carrier boxes, taking advantage of the superior antistatic and electro-conductive characteristics.

Thus, the present invention is to provide for a resin composition having excellent antistatic and electroconductive properties obtained by blending a specific amount of carbon black to a polyphenylene ether-nylon system, and further by selecting a given ratio of polyphenylene ether and nylon, a logarithmic viscosity of polyphenylene ether, and a relative viscosity of nylon.

## Examples

The present invention will more fully be described in reference to the following examples, which are, however, mere illustrations and should never be construed to restrict the present invention.

Compositions were made by blending as shown in the examples and comparative examples, as well as in the tables. The compositions were extruded by twin screw extruder, TEM, of 50 mm diameter made by TOSHIBA KIKAI at a cylinder temperature of 280° C, cooled in a water vessel, and pelletized by a strand cutter. The pellets thus-obtained were dried in vacuo at 130° C for 4 hours, and molded using SUMITOMO Nestal, injection machine, Cycap 110/50 (made by SUMITOMO JUKIKAI) at 290° C of cylinder temperature, 1200 kg/cm$^2$ of injection pressure, and 80° C of mold temperature, to make each test specimen.

The test specimens thus-obtained were tested according to the following methods, to give the data.

(1) V. R. (volume specific resistance; unit Ω • cm):

Volume specific resistance on an 80 mm x 80 mm plate obtained by the injection molding is

measured using an R8340 digital super high resistance meter (made by KABUSHIKI KAISHA ADVANTEST).

(2) MFR. (melt flow rate; unit g/10 min):

MFR is tested according to the ASTM D-1238, with a load of 10 kg and a temperature set at 280 °C.

(3) HDT. (unit °C):

HDT is tested according to the ASTM D-648, with a fiber stress of 18.6 $kg/cm^2$.

(4) Izod impact strength (unit kg • cm/cm):

The impact strength is tested according to the ASTM D-256, with 3.2 mm t notch test specimen.

Reference example

To obtain the compositions shown in the examples and the comparative examples, the following materials were prepared.

[polyphenylene ether resin]

In the present examples, polyphenylene ether obtained by homopolymerization of 2,6-dimethylphenol is used.

Modified PPE-1: obtained by blending a powdered polyphenylene ether resin having a logarithmic viscosity of 0.45 dl/g with 1 % by weight of maleic anhydride, and melt-extruding the mixture at 300 °C.

Modified PPE-2: obtained by blending a powdered polyphenylene ether resin having a logarithmic viscosity of 0.31 dl/g with 1 % by weight of maleic anhydride, and melt-extruding the mixture at 300 °C.

Modified PPE-3: obtained by blending a powdered polyphenylene ether resin having a logarithmic viscosity of 0.51 dl/g with 1 % by weight of maleic anhydride, and melt-extruding the mixture at 300 °C.

Modified PPE-4: obtained by blending a powdered polyphenylene ether resin having a logarithmic viscosity of 0.58 dl/g with 1 % by weight of maleic anhydride, and melt-extruding the mixture at 300 °C.

Modified PPE-5: obtained by blending a powdered poyphenylene ether resin having a logarithmic viscosity of 0.67 dl/g with 1 % by weight of maleic anhydride, and melt-extruding the mixture at 300 °C.

PPE powder: powdered polyphenylene ether resin having a logarithmic viscosity of 0.45 dl/g.

[Polyamide resin]

Nylon-1: nylon 6 having a relative viscosity of 2.6 (terminal group ratio = 1).

Nylon-2: nylon 6 having a relative viscosity of 2.0 (terminal group ratio = 1).

Nylon-3: nylon 6 having a relative viscosity of 3.8 (terminal group ratio = 1).

Nylon-4: nylon 6 having a relative viscosity of 5.8 (terminal group ratio = 1).

Nylon-5: nylon 66 having a relative viscosity of 2.5 (terminal group ratio = 1).

[Carbon black]

| Grade names | Manufacturers | DBP absorption amount (ml/100 g) |
|---|---|---|
| Acetylene black (DENKA black) | DENKI KAGAKU | 212 |
| Ketjenblack (600 JD) | LION | 495 |
| Vulcan C | Cabot | 100 |
| Furnace black (DIA Black #45) | MITSUBISHI KASEI | 55 |

[Rubber materials]

Styrene-butadiene-styrene block copolymer (SBS)
— Cariflex TR 1101 (made by Shell KAGAKU)

[Inorganic fillers]

Talc: Micron White 5000 E, made by HAYASHI KASEI

| | |
|---|---|
| Stainless fiber: | Naslon, made by NIHON SEISEN |
| Carbon fiber: | Magnamite 1800 AS, made by Hercules |
| Pottasium titanate whisker: | Dentol WK-200 |

Examples 1~10 and Comparative examples 1~2

The modified PPE-1 which had been prepared by melt-kneading polyphenylene ether and maleic acid anhydride with a recipe set forth in the Reference example, or the PPE powder with maleic anhydride, was blended with the Nylon-1 and SBS rubber in the same proportions, and then carbon black from various sources as set forth in the Tables 1, 2, and 3 was blended in a given proportion, followed by melt-kneading.

Examples 11~13 and Comparative example 3

The modified PPE-1 and Nylon-1 were blended together in the proportions set forth in the Table 4, and a given amount of carbon black was added thereto, followed by melt-kneading.

Examples 14~17 and Comparative example 4

Each of the modified PPEs prepared from polyphenylene ether having varied logarithmic viscosities, Nylon-1 and carbon black were blended in the proportions set forth in the Tables 5 and 6, and melt-kneaded.

Examples 18~21 and Comparartive example 5

The modified PPE, each of Nylons having varied relative viscosities, and carbon black were blended in the proportions set forth in the Tables 7 and 8, and then melt-kneaded.

Examples 22~25

Inorganic filler was blended in the proportions set forth in the Table 9, and melt-kneaded.

Table 1

| Components | Comparative example 1 | Example 1 | Example 2 | Example 3 |
|---|---|---|---|---|
| Modified PPE-1 | 45 | 45 | 45 | 45 |
| Nylon-1 | 55 | 55 | 55 | 55 |
| SBS | 10 | 10 | 10 | 10 |
| Acetylene black | 0 | 19 | 28 | 47 |
| V. R. | $4x10^{14}$ | $2x10^{11}$ | $6x10^{5}$ | $<1x10^{4}$ |
| MFR. | 120 | 33 | 17 | 1.2 |
| HDT. | 75 | 127 | 135 | 139 |
| Izod impact strength | 58 | 11 | 4.2 | 2.1 |

Table 2

| Components | Example 4 | Example 5 | Example 6 | Example 7 |
|---|---|---|---|---|
| Modified PPE-1 | 45 | 45 | 45 | 0 |
| PPE powder | 0 | 0 | 0 | 45 |
| Maleic anhydride | 0 | 0 | 0 | 0.5 |
| Nylon-1 | 55 | 55 | 55 | 55 |
| SBS | 10 | 10 | 10 | 10 |
| Ketjenblack | 5 | 7 | 14 | 7 |
| V. R. | $4x10^{11}$ | $6x10^{7}$ | $<1x10^{4}$ | $3x10^{7}$ |
| MFR. | 53 | 33 | 2 | 41 |
| HDT. | 90 | 98 | 121 | 99 |
| Izod impact strength | 7.5 | 3.6 | 2.8 | 3.5 |

Table 3

| Components | Example 8 | Example 9 | Example 10 | Comparative example 2 |
|---|---|---|---|---|
| Modified PPE-1 | 45 | 45 | 45 | 45 |
| Nylon-1 | 55 | 55 | 55 | 55 |
| SBS | 10 | 10 | 10 | 10 |
| Vulcan C | 28 | 47 | 100 | 0 |
| Furnace black | 0 | 0 | 0 | 47 |
| V. R. | $7x10^{11}$ | $6x10^{6}$ | $4x10^{4}$ | $3x10^{14}$ |
| MFR. | 45 | 28 | 4 | 32 |
| HDT. | 128 | 142 | 165 | 141 |

Table 4

| Components | Example 11 | Example 12 | Example 13 | Comparative example 3 |
|---|---|---|---|---|
| Modified PPE-1 | 25 | 45 | 70 | 100 |
| Nylon-1 | 75 | 55 | 30 | 0 |
| Acetylene black | 25 | 25 | 25 | 25 |
| V. R. | $9x10^{4}$ | $3x10^{5}$ | $3x10^{8}$ | $4x10^{10}$ |
| MFR. | 48 | 20 | 2 | 0.05 |
| HDT. | 95 | 137 | 172 | 198 |
| Izod impact strength | 1 | 1 | 1 | 1 |

Table 5

| Components | Example 14 | Example 15 | Example 16 |
|---|---|---|---|
| Modified PPE-1 | 55 | 0 | 0 |
| Modified PPE-2 | 0 | 55 | 0 |
| Modified PPE-3 | 0 | 0 | 55 |
| Nylon-1 | 45 | 45 | 45 |
| Acetylene black | 25 | 25 | 25 |
| Extracted constituents | | | |
| $\eta_{Inh}$ of PPE | 0.35 | 0.22 | 0.41 |
| $\eta_{rel}$ of nylon | 2.6 | 2.4 | 2.5 |
| V. R. | $1x10^6$ | $5x10^5$ | $8x10^6$ |
| MFR. | 17 | 31 | 13 |
| HDT. | 154 | 152 | 153 |
| Izod impact strength | 1 | 0.5 | 1 |

Table 6

| Components | Example 17 | Comparative example 4 |
|---|---|---|
| Modified PPE-4 | 55 | 0 |
| Modified PPE-5 | 0 | 55 |
| Nylon-1 | 45 | 45 |
| Acetylene black | 25 | 25 |
| Extracted constituents | | |
| $\eta_{Inh}$ of PPE | 0.52 | 0.65 |
| $\eta_{rel}$ of nylon | 2.2 | 2.0 |
| V. R. | $5x10^7$ | $4x10^9$ |
| MFR. | 7 | 3 |
| HDT | 154 | 153 |
| Izod impact strength | 1 | 1 |

Table 7

| Components | Example 18 | Example 19 | Example 20 |
|---|---|---|---|
| Modified PPE-1 | 55 | 55 | 55 |
| Nylon-1 | 45 | 0 | 0 |
| Nylon-2 | 0 | 45 | 0 |
| Nylon-3 | 0 | 0 | 45 |
| Acetylene black | 25 | 25 | 25 |
| Extracted constituents | | | |
| $\eta_{Inh}$ of PPE | 0.35 | 0.36 | 0.35 |
| $\eta_{rel}$ of nylon | 2.4 | 1.7 | 3.1 |
| V. R. | $1x10^6$ | $5x10^5$ | $7x10^7$ |
| MFR. | 17 | 31 | 11 |
| HDT. | 154 | 152 | 153 |
| Izod impact strength | 1 | 0.5 | 1 |

Table 8

| Components | Example 21 | Comparative example 5 |
|---|---|---|
| Modified PPE-1 | 55 | 55 |
| Nylon-4 | 0 | 45 |
| Nylon-5 | 45 | 0 |
| Acetylene black | 25 | 25 |
| Extracted constituents | | |
| $\eta_{Inh}$ of PPE | 0.35 | 0.35 |
| $\eta_{rel}$ of nylon | 2.5 | 4.2 |
| V. R. | $5x10^5$ | $8x10^9$ |
| MFR. | 15 | 7 |
| HDT. | 172 | 153 |
| Izod impact strength | 0.5 | 1 |

Table 9

| Components | Example 22 | Example 23 | Example 24 | Example 25 |
|---|---|---|---|---|
| Modified PPE-1 | 45 | 45 | 45 | 45 |
| Nylon-1 | 55 | 55 | 55 | 55 |
| Stainless fiber | 3 | 0 | 0 | 0 |
| Talc | 0 | 10 | 0 | 0 |
| Potassium titanate whisker | 0 | 0 | 0 | 5 |
| Carbon fiber | 0 | 0 | 3 | 0 |
| Acetylene black | 26 | 28 | 26 | 26 |
| V. R. | $<1x10^4$ | $5x10^4$ | $<1x10^4$ | $<1x10^4$ |
| MFR. | 20 | 14 | 17 | 19 |
| HDT. | 148 | 152 | 161 | 153 |

The present invention provides a resin composition having antistatic or electroconductivity by blending polyphenylene ether/nylon with a specific amount of carbon black. Furtheromore, the present invention provides a resin composition having excellent antistatic or electroconductivity by selecting a specific ratio of polyphenylene ether to nylon, and specific viscosity ranges of the polyphenylene ether And the nylon.

**Claims**

**1.** A thermoplastic resin composition which comprises
(a) 2 to 95 % by weight of a polyphenylene ether resin and/or a modified polyphenylene ether resin;
(b) 98 to 5 % by weight of a polyamide resin;
(c) 2 to 200 parts by weight of carbon black based on 100 parts by weight of the said (a) + (b);
(d) 0 to 50 parts by weight of a compatibilizing agent based on 100 parts by weight of the said (a) + (b);
(e) 0 to 100 parts by weight of a rubber-like material based on 100 parts by weight of the said (a) + (b); and
(f) 0 to 150 parts by weight of an inorganic filler based on 100 parts by weight of the said (a) + (b);
wherein the logarithmic viscosity of the polyphenylene ether resin extracted from the resin composition is 0.1 to 0.6 dl/g, and the relative viscosity of the polyamide extracted from the resin composition is 0.8 to 4.0.

**2.** A composition according to claim 1 wherein the compatibilizing agent (d) is one or more compound selected from
(A) compounds having (i) C-C double bonds or C-C triple bonds, and (ii) carboxyl, acid anhydride, amino, acid amide, imide, epoxy, carboxylic acid ester, isocyanate or methylol groups, or oxazoline ring, or those simultaneously having hydroxyl group;
(B) saturated aliphatic polycarboxylic acids and their derivatives, represented by the formula:

$(R_6\ O)_m\ R(COOR_7)_n\ (CONR_8\ R_9\ )_s$

wherein R is straight chain or branched aliphatic hydrocarbon with 2 to 20 carbon atoms; $R_6$ is hydrogen, alkyl, aryl, acyl or carbonyldioxy; $R_7$ is hydrogen, or alkyl or aryl with up to 20 carbon atoms; $R_8$ and $R_9$ are the same or different and each is hydrogen or alkyl or aryl with up to 10 carbon atoms; $m = 1$ or 2; n and s are the same or different and each is a positive integer, $n + s$ being an integer of not less than 2; and each group ($R_6$ O) is located in the $\alpha$ - or $\beta$-position relative to a carbonyl group, the polycarboxylic acid or derivative having 2 to 6 carbon atoms between each pair of carbonyl groups.
(c) compounds represented by the formula:

(I) - Z - (II)

wherein (I) is at least one group of the formula: (X - CO)-(wherein X is fluorine, chlorine, bromine, iodine, hydroxyl or a group $OR_{10}$ or -O-CO-$R_{10}$, $R_{10}$ being hydrogen, alkyl or aryl and (II) is at least

one carboxylic acid, acid anhydride, acid amide, imide, carboxylate ester, amino, or hydroxyl group, the groups of (I) and (II) being covalently bound through the linkage Z which is a bivalent hydrocarbon group;
(D) silane compounds having (i) at least one silicon atom bound to a carbon atom via an oxygen linkage, and (ii) at least an ethylenic C-C double bond or C-C triple bond and/or an amino or mercapto functional group which is not bound directly to the silicon atom,
(E) oxidized polyolefin wax, and
(F) one or more copolymers comprising repeating units of a vinyl aromatic compound and an $\alpha$ , $\beta$-unsaturated dicarboxylic acid or its acid anhydride or comprising repeating units of a vinyl aromatic compound and an $\alpha$ , $\beta$-unsaturateddicarboxylic acid imide compound.

**3.** A composition according to claim 1 or 2 wherein the component (a) of the modified polyphenylene ether resin is obtainable by the reaction of a polyphenylene ether resin and a compatibilizing agent (d).

**4.** A composition according to any one of claims 1 to 3 comprising 2 to 75 % by weight of the component (a) and 98 to 25 % by weight of the component (b).

**5.** A resin composition according to claim 4 comprising 5 to 50 % by weight of the component (a) and 95 to 50 % by weight of the component (b).

**6.** A composition according to any one of claims 1 to 5 wherein the component (a) additionally contains a styrene resin.

**7.** A composition according to any one of claims 1 to 6 wherein component (c) has a dibutyl phthalate absorption amount of not less than 70 ml/100 mg.

**8.** A composition according to any one of claims 1 to 7 wherein the inorganic filler (f) is at least one material selected from talc, carbon fiber, stainless fiber, and potassium titanate whisker.